# EUROPEAN PATENT SPECIFICATION

(11) **EP 3 337 000 B1**
(45) Date of publication and mention of the grant of the patent: **13.02.2019**
(21) Application number: 17207858.6
(22) Date of filing: 15.12.2017
(51) Int. Cl.: H02J 3/38, F24F 11/30, F24F 11/46, H02J 3/14, F24F 140/60

(54) **EXPLOITATION OF A PHOTOVOLTAIC SYSTEM COUPLED TO A JOINT WATER BOILER-AIR/AIR HEAT PUMP AIR CONDITIONING SYSTEM**
NUTZUNG EINER PHOTOVOLTAIKANLAGE GEKOPPELT ZU EINER KONBINATION VON WARMWASSERKESSEL UND KLIMAANLAGE MIT LUFT/LUFT-WÄRMEPUMPE
UTILISATION D'UN SYSTÈME PHOTOVOLTAÏQUE COUPLÉ À UNE COMBINAISON DE CHAUDIÈRE À EAU CHAUDE ET D'UN SYSTÈME DE CLIMATISATION AVEC POMPE À CHALEUR AIR/AIR.

(30) Priority: 16.12.2016 IT 201600127654
(43) Date of publication of application: 20.06.2018
(73) Proprietor: Albasolar S.r.l., 12051 Alba (IT)
(72) Inventor: MARENGO, Massimo, 12051 ALBA (IT)
(74) Representative: Bergadano, Mirko

(56) References cited:
- WO-A1-2012/004644
- CN-U- 205 227 491
- US-A1- 2008 092 875

## Description

### Technical Sector of the Invention

The present invention relates to exploitation of a photovoltaic system coupled to a joint water boiler-air/air heat pump air conditioning system.

The present invention finds advantageous, though not exclusive, application in the civil sector to electrically supply a joint water boiler-air/air heat pump air conditioning system to air condition environments intended for residential use, urban use, work purposes, for practicing a profession or supplying a service, to which the following description will refer without any loss of generality.

### Technical Sector of the Invention

As is known, air conditioning systems to heat and cool closed environments generally comprise the following subsystems:
- an energy production/transformation system (heating or cooling),
- a vector fluid (water, air, refrigerant gases) distributing network,
- distribution terminals (by convection, conduction, radiation), and
- a temperature regulation system (control units, chrono-thermostats, thermostatic valves).

Known energy production/transformation systems include those comprising water boilers and heat pumps, which are increasingly coupled to each other to form joint water boiler/ heat pump air conditioning systems, and to photovoltaic systems to exploit electrical energy produced thereby for electrical power supply.

US2008/092875A1, WO2012/004644A1 and CN205227491U represent prior art.

### Object and Abstract of the Invention

It is an object of the present invention to provide a solution which maximizes the level of energy exploitation efficiency in all residential and commercial environments, and, in particular, which maximizes exploitation of the electrical power produced by the photovoltaic systems coupled to joint water boiler-air/air heat pump air conditioning systems to air condition these environments in presence of sun.

This object is achieved by the present invention, which relates to an electronic control system for a joint water boiler-air/air heat pump air conditioning system coupled to a photovoltaic system, as claimed in the appended claims.

### Brief Description of the Drawings

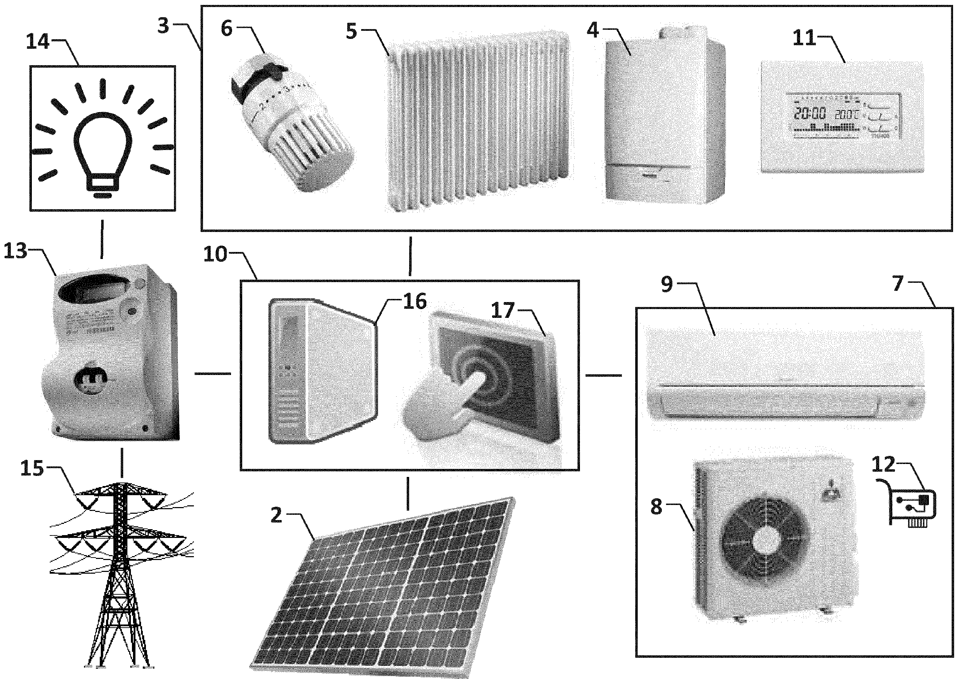

The attached figure shows a block diagram of a joint water boiler-air/air heat pump air conditioning system coupled to a photovoltaic system according to an embodiment of the present invention.

### Detailed Description of a Preferred Embodiment of the Invention

The following description is provided to allow a skilled person to produce and use the invention. Various modifications to the presented embodiments will become immediately apparent to experts, and the general principles disclosed herein may be applied to other embodiments and applications, without departing from the scope of protection of the present invention as defined by the appended claims. Thus, the present invention has not to be understood as limited to the embodiments described and shown, but it must be granted the widest scope of protection in line with the principles and characteristics presented herein and defined in the appended claims.

The attached Figure shows a block diagram of a joint water boiler-air/air heat pump air conditioning system **1** for a closed environment of the type indicated above and coupled to a photovoltaic system **2** with supply of the produced electrical power to the public electrical power mains, with or without economic incentive, and with or without local storage.

The joint water boiler-air/air heat pumfp air conditioning system **1** comprises:
▪ a radiator heating system **3** comprising a water boiler **4** of any kind (gas, pellet, LNG, LPG, diesel, wood) to produce hot water, and radiators (or thermosiphons or heaters) **5** installed in various rooms forming the closed environment to be air conditioned, fluidically connected to the water boiler **4** to be flown through by hot water, and provided with respective thermostatic valves **6** to allow desired temperatures in the rooms in which the radiators **5** are installed to be set, so as to prevent the passage of the hot water in the radiators **5** when the temperatures in the rooms reach the set desired temperatures;
▪ an electrically powered hot/cold air/air heat pump system **7** comprising one or more outdoor units **8** and one or more indoor units **9,** also known as splits, of all types (floor- or wall-installed or channeled) installed in the rooms of the closed environment to be air conditioned, with independent temperature, both hot and cold, management and setting; and
▪ an electronic control system **10** comprising:
   - one or more (chrono) thermostats **11** to switch on/off the water boiler **4** and installed in one or more of the rooms of the closed environment to be air conditioned;
   - a network board **12** associated with each indoor unit **9** of the hot/cold air/air heat pump system **7** to allow the associated indoor unit **9** to be remotely switched on/off;
   - an electronic electrical power meter **13** connected, on the one hand, to the photovoltaic system **2** and to the electrical system (not shown) in the closed environment and through which the various electrical appliances **14** therein, such as, for example, internal and external light sources, household appliances, the hot/cold air/air heat pump system **7,** etc., can be electrically supplied and, on the other hand, to the public electrical power mains **15,** and configured to measure electrical power production of the photovoltaic system **2** and electrical power absorbed from, or supplied to, the public electrical power mains **15** as a result of an electrical power underproduction or overproduction of the photovoltaic system **2** with respect to the electrical power consumption of the electrical appliances **14** in the closed environment; and
   - an electronic control unit **16,** conveniently in the form of a (micro-) programmable logic controller (PLC), connected to the (chrono)thermostats **11** of the water boiler **4,** to the network boards **12** of the indoor units **9** of the hot/cold air/air heat pump system **7,** and to the electronic electrical power meter **13** through a wired data bus network to guarantee maximum reliability, exploiting existing passages, and provided with a touch screen **17** to allow the electronic control unit **16** to be programmed and manual commands to be imparted, and to be conveniently installed in an accessible and convenient place in the closed environment, and on which a proprietary management software is installed to allow operation of the joint water boiler-air/air heat pump air conditioning system **1** to be managed based on electrical power production of the photovoltaic system **2,** as described herein below in detail.

The indoor units **9** of the hot/cold air/air heat pump system **7** are preferably of the wall-mounted type with energy efficiency class A+++ on heating, with a 3D temperature and presence sensor, so as to allow, on the one hand, people in the rooms in which they are installed to be detected by means of the presence sensor, in order to allow the produced air flow to be selectively directed, by means of internal motorized air vents, away from people in the rooms so as to avoid them feeling unpleasant sensation of air on them, whether it is hot or cold (the so-called "avoid me" function), and also temperatures in the coldest points of the rooms, usually on the floor, to be measured by means of the 3D temperature sensor via a heat detection infrared beam.

Conveniently, the hot/cold air/air heat pump system **7** comprises several independent outdoor units **8** to allow loads and electrical consumption of the hot/cold air/air heat pump system **7** to be partialized so as to allow the photovoltaic system **2** to supply also only one or a few of the indoor units **9,** which consume a few hundred watts each. Whereas this is not possible with hot/cold water/air heat pump systems because their consumptions are poorly partilizable and significantly larger.

The management software installed on the PLC **16** is designed to display on the display **17** of the PLC **16** a graphical user interface (GUI) through which a user can interact with the joint water boiler-air/air heat pump air conditioning system **1,** and in particular, select the various operating modes provided and program their hourly daily operation, and receive various information related to its operation.

In greater detail, the management software is designed to allow selections to be made according to a hierarchical order, and in particular, to make:
- a main selection between a manual operating mode, in which the operation of the joint water boiler-air/air heat pump air conditioning system 1 is controllable by the user by means of direct actions on the various components of the joint water boiler-air/air heat pump air conditioning system **1** (temperature settings on the (chrono)thermostats **11** of the water boiler **4,** settings on the remote controls of the indoor units **9** of the hot/cold air/air heat pump system **7,** etc.), and an automatic operating mode, in which the operation of the joint water boiler-air/air heat pump air conditioning system **1** is completely controlled by the management software,
- in the automatic operating mode, a secondary selection between a heating mode, a cooling mode and a dehumidification mode, and
- both in the heating mode and in the cooling mode, a tertiary selection between an operating mode called "at home", suitable for when people are present in the closed environment, an operating mode called "away from home", suitable for when no people are present in the closed environment, and an operating mode called "holiday" specifically for exploiting only the electrical power produced by the photovoltaic system **2.**

In relation to the heating and cooling modes, the management software is further designed to allow priorities to be programmed, namely the switching on/off time sequence of the indoor units **9** of the hot/cold air/air heat pump system **7** during the day, for example, first the one in the kitchen, then the one in the living room, and finally, those in the bedrooms, as well as the switching on/off temperatures of the indoor units **9** of the hot/cold air/air heat pump system **7,** which should conveniently be set to be the same as, or close to, those set on the thermostatic valves **6** of the radiators **5** arranged in the same rooms, so that the indoor units **9** the hot/cold air/air heat pump system **7** are cause to operate so that they tend to reach the temperatures set on the thermostatic valves **6.**

Again in relation to the heating and cooling modes, in both operating modes the management software is further designed to implement a proprietary strategy of management of the joint water boiler-air/air heat pump air conditioning system **1,** which strategy is the result of the dual observation that the photovoltaic system **2** has an average electric power production curve which grows from the morning peaking between twelve and one o'clock, subsequently decreasing until zero at sunset, and that the surplus electrical power production of the photovoltaic system **2** with respect to the electrical power consumption of the electrical appliances **14** in the closed environment is supplied to the public electrical power mains **15** at a cost that is currently very low, about eight to ten times lower than the gross purchase price paid by a user to the electricity companies that produce or sell electrical power.

In particular, with regard to the management of the hot/cold air/air heat pump system **7,** the management software is designed to:
- receive data from the (chrono)thermostats **11** of the water boiler **4,** from the network boards **12** of the indoor units **9** of the hot/cold air/air heat pump system **7,** and from the electronic electrical power meter **13;**
- constantly monitor, based on the received data, the electrical power production of the photovoltaic system **2** and the electrical power consumption of the electrical appliances **14** in the closed environment and, based thereon, the surplus electrical power production of the photovoltaic system **2** with respect to the electrical power consumption of the electrical appliances **14** in the closed environment, and that, for such reason, would be supplied to the public electrical power mains **15** at a very low cost, and if it is determined that there is a surplus of electrical power production of the photovoltaic system **2** with respect to the electrical power consumption of the electrical appliances **14** in the closed environment, compute the maximum number of indoor units **9** of the hot/cold air/air heat pump system **7** which can be supplied simultaneously with the electrical power surplus;
- if the surplus electrical power production of the photovoltaic system **2** is determined to be enough to supply one or more indoor units **9** of the hot/cold air/air heat pump system **7** simultaneously, check whether there are indoor units **9** of the hot/cold air/air heat pump system **7** that are scheduled to be simultaneously switched on; and
- if there are indoor units **9** of the hot/cold air/air heat pump system **7** that are scheduled to be simultaneously switched on, switch on those indoor units **9** of the hot/cold air/air heat pump system **7** that are scheduled to be switched on based on the programmed switching on priorities and in a number no greater than the maximum number of indoor units **9** of the hot/cold air/air heat pump system **7** which can be electrically supplied simultaneously with the electrical power surplus of the photovoltaic system **2.**

Thanks to this operating mode, should the surplus electrical power production of the photovoltaic system **2** with respect to the electrical power consumption of the electrical appliances **14** in the closed environment grow during the day, as is normally the case on a sunny day, then the management software causes the surplus electrical power to be exploited to supply the indoor units **9** of the hot/cold air/air heat pump system **7** that are scheduled to be switched on, instead of being supplied to the public electrical power mains **15** at a very low cost.

Should instead the surplus electrical power production of the photovoltaic system **2** with respect to the electrical power consumption of the electrical appliances **14** in the closed environment fail to grow, but actually decrease during the day, as a result, for example, of a gradual clouding over or the approaching of sunset, the management software causes the gradual switching off of the indoor units **9** of the hot/cold air/air heat pump system **7** which are on, as the surplus electrical power gradually decreases.

In both cases, the management software adjust the operation of the hot/cold air/air heat pump system **7** so as to maximize exploitation of the electrical power production of the photovoltaic system **2** to electrically supply the hot/cold air/air heat pump system **7,** consequently minimizing the electrical power adsorption from the public electrical power mains **15** to supply the same.

With regard to the operating mode "at home", the management software is designed to give priority to reaching the temperatures set on the (chrono) thermostats **11** arranged in the closed environment due to the presence of people in the same. In order to do this, the management software is designed to cause the water boiler **4** and the indoor units **9** of the hot/cold air/air heat pump system **7** to operate together in a programmed mode, namely by checking, first of all, whether the temperatures set on the various (chrono)thermostats **11** can be reached in a predetermined time span using only the indoor units **9** of the hot/cold air/air heat pump system **7,** and, if so, keeping the water boiler **4** switched off and activating only the indoor units **9** of the hot/cold air/air heat pump system **7,** and, if not, also switching on the water boiler **4** in addition to the indoor units **9** of the hot/cold air/air heat pump system **7,** without waiting for the surplus electrical power production of the photovoltaic system **2** to be used up.

With regard to the operating mode "away from home", it is based on the assumption that the closed environment fills with people in the evening when the sun has set, so the management software is designed to leave the task of air conditioning the closed environment to the indoor units **9** of the hot/cold air/air heat pump system **7** during the day, and to switch on the water boiler **4** only when the surplus electrical power production of the photovoltaic system **2** has been used up.

In this way, during winter, on a sunny day, the indoor units **9** of the hot/cold air/air heat pump system **7** are switched on and off with a sequence programmed based on the surplus electrical power production of the photovoltaic system **2** with respect to the electrical power consumption of the electrical appliances **14** in the closed environment, on the electrical power consumption of each indoor unit **9** of the hot/cold air/air heat pump system **7,** and on the switching on/off priorities. Thus, the various rooms of the closed environment will begin to heat up in the presence of sun, light and energy available. If the rooms cannot reach the set temperatures, the water boiler **4** will switch on and it will follow the same aforesaid operating mode based on the temperatures set on the thermostatic valves **6** of the radiators **5,** which will then heat up just enough to bridge the differences in temperature reached by switching on the indoor units **9** of the hot/cold air/air heat pump system **7.**

Naturally, enablement to switch on the water boiler **4** or not is also given by the (chrono)thermostats **11,** but in any case the actual command is given by the PLC **16** which also follows the user's programming, comprising the setting of the operating mode "at home", "away from home" or "holiday".

With regard to the summer period, the automatic operating modes are the same, namely based on the switching on/off of the indoor units **9** of the hot/cold air/air heat pump system **7** based on the surplus electrical power production of the photovoltaic system **2** with respect to the consumption of the electrical appliances **14** in the closed environment, except, of course, on using the water boiler **4,** which is only used to produce domestic hot water, which, if so desired, could also be produced by an ad hoc heat pump which may be operated to exclusively produce hot domestic water, only in summer or all year, based on the settings and also on the surplus electrical power production of the photovoltaic system **2.** Cooling will be strictly during the daytime, so that the closed environment is brought to a fresh temperature in the day when it is sunny and when there is a considerable surplus electrical power production of the photovoltaic system **2.**

Finally, it goes without saying that if there is no electrical power production of the photovoltaic system **2** or if there is an electrical power production, but not a surplus with respect to the electrical power consumption of the electrical appliances **14** in the closed environment, the management software is programmed to air condition the closed environment traditionally, namely by using the water boiler 4 of the radiator heating system **3** during winter and the indoor units **9** of the air/air heat pump system **7** during summer.

Finally, it is possible to provide a web version which requires a connection of the PLC to a local Wi-Fi network, so that it is possible to access the PLC **16** remotely by a user terminal and through an Internet connection, so as to display the same information and make the same adjustments and settings as those, which can be displayed and made via the GUI displayed on the display **17** of the PLC **16.** In particular, the web version is especially advantageous when, in the case of needing to return home earlier than planned, it is necessary to modify the implemented operating mode from "away from home" to "at home". In this case, it will be sufficient to set the operating mode "at home" by means of a smartphone, and the PLC **16** will bring the temperatures set for the various rooms of the environment to the values set on the (chrono) thermostats **11.**

From the above description, the advantages which can be achieved with the present invention may be appreciated. In particular, in brief, the present invention allows the following objectives to be reached:
- practically free summer air conditioning and domestic water production,
- free air conditioning and domestic water production during mid-seasons when it is sunny,
- winter heating and domestic water production with a very low use of the water boiler the more sunny days there are,
- 100% exploitation of the electrical power production of the photovoltaic system to cut not only the costs to be incurred to purchase the electrical power but, above all, the costs to be incurred for air conditioning, and this is implementable with a electrical power storage system, also to cover evening or night time electrical power consumption.

## Claims

1. An electronic control system (**10**) for a joint water boiler-air/air heat pump air conditioning system (**1**) coupled to a photovoltaic system (**2**) and intended to air condition a closed environment formed by one or more rooms and comprising an electrical system to which electrical appliances (**14**) are connected;
the joint water boiler-air/air heat pump air conditioning system (**1**) comprises:
▪ a radiator heating system (**3**) comprising a water boiler (**4**) to produce hot water, and one or more radiators (**5**) intended to be installed in the rooms of the closed environment, fluidically connected to the water boiler (**4**) to be flown through by the hot water produced by the water boiler (**4**), and equipped with thermostatic valves (**6**) to set desired temperatures in the rooms of the closed environment in which they are installed; and
▪ a hot/cold air/air heat pump system (**7**) comprising one or more outdoor units (**8**) intended to be installed outside the closed environment, and one or more indoor units (**9**) intended to be installed in the rooms of the closed environment;
the electronic control system (**10**) comprises:
- one or more (chrono)thermostats (**11**) intended to be installed in one or more of the rooms of the closed environment to switch the water boiler (**4**) on and off;
- a network board (**12**) associated with each indoor unit (**9**) of the hot/cold air/air heat pump system (**7**) to remote control operation of the associated indoor unit (**9**);
- an electronic electrical power meter (**13**) connected to the photovoltaic system (**2**), the electrical appliances (**14**) in the closed environment, and public electrical power mains (**15**) to measure electrical power production of the photovoltaic system (**2**) and electrical power absorbed from, or supplied to, the public electrical power mains (**15**) as a result of an electrical power underproduction or overproduction of the photovoltaic system (**2**) with respect to the electrical power consumption of the electrical appliances (**14**) in the closed environment; and
- an electronic control unit (**16**) connected to the (chrono)thermostats (**11**) of the water boiler (**4**), the network boards (**12**) of the indoor units (**9**) of the hot/cold air/air heat pump system (**7**), and the electronic electrical power meter (**13**), provided with a display (**17**) through which a user can interact with the joint water boiler-air/air heat pump air conditioning system (**1**), and programmed to manage the joint water boiler-air/air heat pump air conditioning system (**1**) based on the electrical power production of the photovoltaic system (**2**);
the electronic control unit (**16**) is also programmed to:
- allow operating modes to be selected and operation of the joint water boiler-air/air heat pump air conditioning system (**1**) to be programmed, and information on the operation of the joint water boiler-air/air heat pump air conditioning system (**1**) to be displayed on the display (**17**);
- allow switch on/off priorities and temperatures of the indoor units (**9**) of the hot/cold air/air heat pump system (**7**) to be programmed,
- receive data from the (chrono)thermostats (**11**) of the water boiler (**4**), the network boards (**12**) of the indoor units (**9**) of the hot/cold air/air heat pump system (**7**), and the electronic electrical power meter (**13**);
- compute, based on the received data, electrical power production of the photovoltaic system (**2**) and electrical power consumption of the electrical appliances (**14**) in the closed environment and, based thereon, electrical power production of the photovoltaic system (**2**) in surplus of the electrical power consumption of the electrical appliances (**14**) in the closed environment; and
- when a surplus of electrical power production of the photovoltaic system (**2**) with respect to the electrical power consumption of the electrical appliances (**14**) in the closed environment is determined to exist, switch on the indoor units (**9**) of the hot/cold air/air heat pump system (**7**) based on the surplus of electrical power production of the photovoltaic system (**2**) with respect to the electrical power consumption of the electrical appliances (**14**) in the closed environment.

2. The electronic control system (**10**) of claim 1, wherein the electronic control unit (**16**) is also programmed:
- when a surplus of electrical power production of the photovoltaic system (**2**) with respect to the electrical power consumption of the electrical appliances (**14**) in the closed environment is determined to exist, determine how many indoor units (**9**) of the hot/cold air/air heat pump system (**7**) can be electrically supplied simultaneously with the electrical power surplus;
- when the surplus of electrical power production of the photovoltaic system (**2**) with respect to the electrical power consumption of the electrical appliances (**14**) in the closed environment is determined to be enough to electrically supply one or more indoor units (**9**) of the hot/cold air/air heat pump system (**7**) simultaneously, check whether there are indoor units (**9**) of the hot/cold air/air heat pump system (**7**) that are scheduled to be simultaneously switched on; and
- if there are indoor units (**9**) of the hot/cold air/air heat pump system (**7**) that are scheduled to be simultaneously switched on, switch on those indoor units (**9**) of the hot/cold air/air heat pump system (**7**) that are scheduled to be switched on based on the programmed switch on priorities and in a number no greater than the maximum number of indoor units (**9**) of the hot/cold air/air heat pump system (**7**) that can be electrically supplied simultaneously with the electrical power surplus of the photovoltaic system (**2**).

3. The electronic control system (**10**) of claim 1 or 2, wherein the electronic control unit (**16**) is further programmed to allow hierarchical selections to be made and comprising:
- a main selection between a manual operating mode and an automatic operating mode,
- in the automatic operating mode, a secondary selection between a heating mode, a cooling mode and a dehumidification mode, and
- both in heating mode and in cooling mode, a tertiary selection between an operating mode suitable for when people are present in the closed environment, an operating mode suitable for when no people are present in the closed environment, and a specific operating mode for exploiting only the electrical power production of the photovoltaic system (**2**).

4. The electronic control system (**10**) of claim 3, wherein the electronic control unit (**16**) is further programmed to switch on the indoor units (**9**) of the hot/cold air/air heat pump system (**7**) based on the electrical power surplus of the photovoltaic system (**2**) both in the heating mode and in the cooling mode.

5. The electronic control system (**10**) of claim 3 or 4, wherein in the automatic operating mode suitable for when people are present in the closed environment, the electronic control unit (**16**) is further programmed to:
- check whether temperatures set on the (chrono)thermostats (**11**) can be reached in a predetermined period of time using only the indoor units (**9**) of the hot/cold air/air heat pump system (**7**),
- in the affirmative, maintain the water boiler (**4**) switched off and switch on only the indoor units (**9**) of the hot/cold air/air heat pump system (**7**), and
- in the negative, to switch on both the water boiler (**4**) and the indoor units (**9**) of the hot/cold air/air heat pump system (**7**), also in the presence of a surplus of electrical power production of the photovoltaic system (**2**) with respect to the electrical power consumption of the electrical appliances (**14**) in the closed environment.

6. The electronic control system (**10**) of claim 3, 4 or 5, wherein in the automatic operating mode suitable for when no people are present in the closed environment, the electronic control unit (**16**) is further programmed to:
- air condition the closed environment using only the indoor units (**9**) of the hot/cold air/air heat pump system (**7**) during the day, and
- switch on the water boiler (**4**) only when the electrical power surplus of the photovoltaic system (**2**) has been used up.

7. Software loadable in an electronic control unit (**16**) of an electronic control system (**10**) of a joint water boiler-air/air heat pump air conditioning system (**1**) coupled to a photovoltaic system (**2**) and designed to cause, when executed, the electronic control unit (**16**) to become programmed as claimed in any one of the preceding claims.

## Patentansprüche

1. Elektronisches Steuerungssystem (10) für ein gekoppeltes Wasserkocher - Luft/Luft-Wärmepumpen - Klimaanlagensystem (1), das mit einem Photovoltaiksystem (2) gekoppelt ist und dazu vorgesehen ist, eine geschlossene Umgebung zu klimatisieren, die durch einen oder mehrere Räume gebildet ist und ein elektrisches System umfasst, mit dem elektrische Geräte (14) verbunden sind;
wobei das gekoppelte Wasserkocher - Luft/Luft-Wärmepumpen - Klimaanlagensystem (1) aufweist:
ein Heizkörperheizsystem (3) mit einem Wasserkocher (4) zur Erzeugung von Warmwasser und einem oder mehreren Heizkörpern (5), die in den Räumen der geschlossenen Umgebung installiert werden sollen, die fluidisch mit dem Wasserkocher (4) verbunden sind und mit Thermostatventilen (6) zum Einstellen der gewünschten Temperaturen in den Räumen der geschlossenen Umgebung, in der sie installiert sind, ausgestattet sind; und
ein Heiß-/Kalt-Luft/Luft-Wärmepumpensystem (7) mit einer oder mehreren Außeneinheiten (8), die außerhalb der geschlossenen Umgebung installiert werden sollen, und einer oder mehreren Inneneinheiten (9), die innerhalb der Räume der geschlossenen Umgebung installiert werden sollen;
wobei das elektronische Steuerungssystem (10) aufweist:
einen oder mehrere (Chrono-)Thermostate (11), die dazu ausgebildet sind, in einem oder mehreren der Räume der geschlossenen Umgebung installiert zu werden, um den Wasserkocher (4) ein- und auszuschalten;
eine Vielzahl an Netzwerkkarten (12), die jeweils einer Inneneinheit (9) des Heiß-/Kalt-Luft/Luft-Wärmepumpensystems (7) zugeordnet sind, um den Betrieb der zugeordneten Inneneinheit (9) fernzusteuern;
einen elektronischen Stromzähler (13), der mit dem Photovoltaiksystem (2), den elektrischen Geräten (14) in der geschlossenen Umgebung und öffentlichen Stromnetzen (15) verbunden ist, um die elektrische Stromerzeugung des Photovoltaiksystems (2) und die elektrische Leistung zu messen, die, als Folge einer elektrischen Stromunterproduktion oder -überproduktion des Photovoltaiksystems (2) in Bezug auf den elektrischen Stromverbrauch der elektrischen Geräte (14) in der geschlossenen Umgebung, von den öffentlichen Stromnetzen (15) aufgenommen oder an diese abgegeben wird; und
eine elektronische Steuereinheit (16), die mit den (Chrono-)Thermostaten (11) des Wasserkochers (4), den Netzwerkkarten (12) der Inneneinheiten (9) des Heiß-/Kalt-Luft/Luft-Wärmepumpensystem (7), und dem elektronischen Stromzähler (13) verbunden ist, die mit einer Anzeige (17) versehen ist, über die ein Benutzer mit dem gekoppelten Wasserkocher - Luft/Luft-Wärmepumpen - Klimaanlagensystem (1) basierend auf der elektrischen Stromerzeugung desr Photovoltaiksystems (2) interagieren kann;
wobei die elektronische Steuereinheit ebenfalls programmiert ist:
die Auswahl der Betriebsarten und die Programmierung des Betriebs des gekoppelten Wasserkocher - Luft/Luft-Wärmepumpen - Klimaanlagensystems (1) sowie die Anzeige von Informationen über den Betrieb des gekoppelten Wasserkocher - Luft/Luft-Wärmepumpen - Klimaanlagensystems (1) auf dem Display (17) zu ermöglichen;
die Programmierung von Ein-/Ausschaltprioritäten und Temperaturen der Inneneinheiten (9) des zu programmierenden Heiß-/Kalt-Luft/Luft-Wärmepumpensystems (7) zu ermöglichen,
Daten von den (Chrono-)Thermostaten (11) des Wasserkochers (4), den Netzwerkkarten (12) der Inneneinheiten (9) des Heiß-/Kalt-Luft/Luft-Wärmepumpensystems (7) und dem elektronischen Stromzähler (13) zu empfangen;
basierend auf den empfangenen Daten, eine elektrische Energieerzeugung des Photovoltaiksystems (2) und einen elektrischen Leistungsverbrauch der elektrischen Geräte (14) in der geschlossenen Umgebung und, basierend darauf, einen Überschuss von elektrischer Energieerzeugung des Photovoltaiksystems (2) gegenüber des elektrischen Leistungsverbrauchs der elektrischen Geräte (14) in der geschlossenen Umgebung zu berechnen; und
die Inneneinheiten (9) des Heiß-/Kalt-Luft/Luft-Wärmepumpensystems (7) basierend auf dem Überschuss der elektrischen Energieerzeugung des Photovoltaiksystems (2) in Bezug auf den elektrischen Leistungsverbrauch der elektrischen Geräte (14) in der geschlossenen Umgebung einzuschalten, wenn ein Überschuss der elektrischen Energieerzeugung des Photovoltaiksystems (2) in Bezug auf den elektrischen Leistungsverbrauch der elektrischen Geräte (14) in der geschlossenen Umgebung festgestellt wird.

2. Elektronisches Steuerungssystem (10) nach Anspruch 1, wobei die elektronische Steuereinheit (16) ebenfalls programmiert ist:
zu bestimmen, wie viele Inneneinheiten (9) des Heiß-/Kalt-Luft/Luft-Wärmepumpensystems (7) zeitgleich mit dem elektrischen Überschuss elektrisch versorgt werden können, wenn das Vorhandensein eines Überschusses der elektrischen Energieerzeugung des Photovoltaiksystems (2) in Bezug auf den elektrischen Energieverbrauch der elektrischen Geräte (14) in der geschlossenen Umgebung festgestellt wird;
zu überprüfen, ob Inneneinheiten (9) des Heiß-/Kalt-Luft/Luft-Wärmepumpensystems (7) vorhanden sind, die bestimmt sind zeitgleich eingeschaltet zu werden, wenn der Überschuss der elektrischen Energieerzeugung der Photovoltaiksystems (2) in Bezug auf den elektrischen Energieverbrauch der elektrischen Geräte (14) in der geschlossenen Umgebung als ausreichend für die zeitgleiche elektrische Versorgung einer oder mehrerer Inneneinheiten (9) des Heiß-/Kalt-Luft/Luft-Wärmepumpensystems (7) bestimmt wird; und
die Inneneinheiten (9) des Heiß-/Kalt-Luft/Luft-Wärmepumpensystems (7) einzuschalten, die gemäß den programmierten Einschaltprioritäten eingeschaltet werden sollen, und zwar in einer Anzahl, die nicht größer ist als die maximale Anzahl von Inneneinheiten (9) des Heiß-/Kalt-Luft/Luft-Wärmepumpensystems (7), die zeitgleich mit dem elektrischen Leistungsüberschuss des Photovoltaiksystems elektrisch versorgt werden können, wenn Inneneinheiten (9) des Heiß-/Kalt-Luft/Luft-Wärmepumpensystems (7) vorhanden sind, die dazu bestimmt sind, zeitgleich eingeschaltet zu werden.

3. Elektronisches Steuerungssystem (10) nach einem der Ansprüche 1 oder 2, wobei die elektronische Steuereinheit (16) ferner programmiert ist, um hierarchische Auswahlen zu ermöglichen, umfassend:
eine Hauptauswahl zwischen einem manuellen Betriebsmodus und einem automatischen Betriebsmodus,
in dem automatischen Betriebsmodus, eine sekundäre Auswahl zwischen einem Heizmodus, einem Kühlmodus und einem Entfeuchtungsmodus,
und sowohl im Heizmodus als auch im Kühlmodus, eine tertiäre Auswahl zwischen einem Betriebsmodus, der für den Fall geeignet ist, dass sich Personen in der geschlossenen Umgebung befinden, einem Betriebsmodus, der für den Fall geeignet ist, dass sich keine Personen in der geschlossenen Umgebung befinden, und einem spezifischen Betriebsmodus, in dem nur die elektrische Energieerzeugung des Photovoltaiksystems (2) genutzt wird.

4. Elektronisches Steuerungssystem (10) nach Anspruch 3, wobei die elektronische Steuereinheit (16) ferner programmiert ist, im Heizmodus und im Kühlmodus die Inneneinheiten (9) des Heiß-/Kalt-Luft/Luft-Wärmepumpensystems (7) basierend auf dem elektrischen Leistungsüberschuss des Photovoltaiksystems (2) einzuschalten.

5. Elektronisches Steuerungssystem (10) nach einem der Ansprüche 3 oder 4, wobei in der automatischen Betriebsart, die für den Fall geeignet ist, dass sich Personen in der geschlossenen Umgebung befinden, die elektronische Steuereinheit (16) ferner programmiert ist:
zu überprüfen, ob die an den (Chrono-)Thermostaten (11) eingestellten Temperaturen in einem vorbestimmten Zeitraum lediglich mit den Inneneinheiten (9) des Heiß-/Kalt-Luft/Luft-Wärmepumpensystems (7) erreicht werden können,
falls dem so ist, den Wasserkocher (4) ausgeschaltet zu halten und nur die Inneneinheiten (9) des Heiß-/Kalt-Luft/Luft-Wärmepumpensystems (7) einzuschalten, und
andernfalls sowohl den Wasserkocher (4) als auch die Inneneinheiten (9) des Heiß-/Kalt-Luft/Luft-Wärmepumpensystems (7) einzuschalten, auch bei Vorhandensein eines Überschusses an elektrischer Energieerzeugung des Photovoltaiksystems (2) in Bezug auf den elektrischen Energieverbrauch der elektrischen Geräte (14) in der geschlossenen Umgebung.

6. Elektronisches Steuerungssystem (10) nach einem der Ansprüche 3, 4 oder 5, wobei in der automatischen Betriebsart, die für den Fall geeignet ist, dass sich keine Personen in der geschlossenen Umgebung aufhalten, die elektronische Steuereinheit (16) ferner programmiert ist:
während des Tages die geschlossene Umgebung lediglich mit Hilfe der Inneneinheiten (9) des Heiß-/Kalt-Luft/Luft-Wärmepumpensystems (7) zu klimatisieren und
den Wasserkocher (4) lediglich dann einzuschalten, wenn der elektrische Leistungsüberschuss des Photovoltaiksystems (2) aufgebraucht ist.

7. Software, die in eine elektronische Steuereinheit (16) eines elektronischen Steuersystems (10) eines gekoppelten Wasserkocher - Luft/Luft-Wärmepumpen - Klimaanlagensystem (1), das mit einem Photovoltaiksystem (2) gekoppelt ist, geladen werden kann und dazu ausgebildet ist, bei der Ausführung die elektronische Steuereinheit (16) derart zu programmieren, wie in einem der vorhergehenden Ansprüche beansprucht wird.

## Revendications

1. Système de commande électronique (10) pour une combinaison (1) constituée par une chaudière à eau et par un système de climatisation à pompe à chaleur air/air, en couplage sur un système photovoltaïque (2) et dont l'objet consiste à climatiser un environnement fermé qui est formé par une ou plusieurs pièce(s) et qui comprend un système électrique sur lequel des appareils électriques (14) sont connectés ;
la combinaison (1) constituée par une chaudière à eau et par un système de climatisation à pompe à chaleur air/air comprend :
• un système de chauffage par radiateur(s) (3) qui comprend une chaudière à eau (4) pour produire de l'eau chaude et un ou plusieurs radiateur(s) (5) qui est/sont destiné(s) à être installé(s) dans les pièces de l'environnement fermé, lequel/lesquels radiateur(s) est/sont connecté(s) en termes de fluide à la chaudière à eau (4) de manière à ce que l'eau chaude qui est produite par la chaudière à eau (4) circule à l'intérieur du/des radiateur(s), et lequel/lesquels radiateur(s) est/sont équipé(s) de vannes thermostatiques (6) dont l'objet est de régler des températures souhaitées dans les pièces de l'environnement fermé dans lesquelles le(s) radiateur(s) est/sont installé(s) ; et
• un système de pompe à chaleur air/air chaud/froid (7) qui comprend une ou plusieurs unité(s) extérieure(s) (8) qui est/sont destinée(s) à être installée(s) à l'extérieur de l'environnement fermé et une ou plusieurs unité(s) intérieure(s) (9) qui est/sont destinée(s) à être installée(s) dans les pièces de l'environnement fermé ;
le système de commande électronique (10) comprend :
- un ou plusieurs (chrono)-thermostat(s) (11) qui est/sont destiné(s) à être installé(s) dans une ou plusieurs des pièces de l'environnement fermé de manière à ce qu'il(s) commute(nt) la chaudière à eau (4) dans l'état de marche et dans l'état d'arrêt ;
- une carte de réseau (12) qui est associée à chaque unité intérieure (9) du système de pompe à chaleur air/air chaud/froid (7) de manière à ce qu'elle commande à distance le fonctionnement de l'unité intérieure associée (9) ;
- un compteur d'énergie électrique électronique (13) qui est connecté au système photovoltaïque (2), aux appareils électriques (14) dans l'environnement fermé et à un réseau d'énergie électrique public (15) de manière à ce qu'il mesure la production d'énergie électrique du système photovoltaïque (2) et l'énergie électrique qui est absorbée depuis le réseau d'énergie électrique public (15) ou qui est alimentée sur ce même réseau d'énergie électrique public en tant que résultat d'une sous-production ou d'une sur-production d'énergie électrique du système photovoltaïque (2) par rapport à la consommation d'énergie électrique des appareils électriques (14) dans l'environnement fermé ; et
- une unité de commande électronique (16) qui est connectée aux (chrono)-thermostats (11) de la chaudière à eau (4), aux cartes de réseau (12) des unités intérieures (9) du système de pompe à chaleur air/air chaud/froid (7) et au compteur d'énergie électrique électronique (13), munie d'un affichage (17) par l'intermédiaire duquel un utilisateur peut interagir avec la combinaison (1) constituée par une chaudière à eau et par un système de climatisation à pompe à chaleur air/air, et programmée de manière à ce qu'elle gère la combinaison (1) constituée par une chaudière à eau et par un système de climatisation à pompe à chaleur air/air sur la base de la production d'énergie électrique du système photovoltaïque (2) ;
l'unité de commande électronique (16) est également programmée :
- de manière à ce qu'elle permette la sélection de modes de fonctionnement et la programmation du fonctionnement de la combinaison (1) constituée par une chaudière à eau et par un système de climatisation à pompe à chaleur air/air, ainsi que l'affichage d'une information concernant le fonctionnement de la combinaison (1) constituée par une chaudière à eau et par un système de climatisation à pompe à chaleur air/air sur l'affichage (17) ;
- de manière à ce qu'elle permette la programmation de priorités de commutation dans les états de marche/d'arrêt et des températures des unités intérieures (9) du système de pompe à chaleur air/air chaud/froid (7) ;
- de manière à ce qu'elle reçoive des données qui proviennent des (chrono)-thermostats (11) de la chaudière à eau (4), des cartes de réseau (12) des unités intérieures (9) du système de pompe à chaleur air/air chaud/froid (7) et du compteur d'énergie électrique électronique (13) ;
- de manière à ce qu'elle calcule, sur la base des données reçues, la production d'énergie électrique du système photovoltaïque (2) et la consommation d'énergie électrique des appareils électriques (14) dans l'environnement fermé et, sur la base de cette production et de cette consommation, de manière à ce qu'elle calcule la production d'énergie électrique du système photovoltaïque (2) en surplus de la consommation d'énergie électrique des appareils électriques (14) dans l'environnement fermé ; et
- lorsqu'un surplus de production d'énergie électrique du système photovoltaïque (2) par rapport à la consommation d'énergie électrique des appareils électriques (14) dans l'environnement fermé est déterminé comme existant, de manière à ce qu'elle commute dans l'état de marche les unités intérieures (9) du système de pompe à chaleur air/air chaud/froid (7) sur la base du surplus de production d'énergie électrique du système photovoltaïque (2) par rapport à la consommation d'énergie électrique des appareils électriques (14) dans l'environnement fermé.

2. Système de commande électronique (10) selon la revendication 1, dans lequel l'unité de commande électronique (16) est également programmée :
- lorsqu'un surplus de production d'énergie électrique du système photovoltaïque (2) par rapport à la consommation d'énergie électrique des appareils électriques (14) dans l'environnement fermé est déterminé comme existant, de manière à ce qu'elle détermine combien d'unités intérieures (9) du système de pompe à chaleur air/air chaud/froid (7) peuvent être alimentées électriquement simultanément par le surplus d'énergie électrique ;
- lorsque le surplus de production d'énergie électrique du système photovoltaïque (2) par rapport à la consommation d'énergie électrique des appareils électriques (14) dans l'environnement fermé est déterminé comme étant suffisant pour alimenter électriquement une ou plusieurs unité(s) intérieure(s) (9) du système de pompe à chaleur air/air chaud/froid (7) simultanément, de manière à ce qu'elle vérifie si oui ou non il y a des unités intérieures (9) du système de pompe à chaleur air/air chaud/froid (7) qui sont planifiées de manière à ce qu'elles soient commutées simultanément dans l'état de marche ; et
- s'il y a des unités intérieures (9) du système de pompe à chaleur air/air chaud/froid (7) qui sont planifiées de manière à ce qu'elles soient commutées simultanément dans l'état de marche, de manière à ce qu'elle commute dans l'état de marche ces unités intérieures (9) du système de pompe à chaleur air/air chaud/froid (7) qui sont planifiées comme devant être commutées dans l'état de marche sur la base des priorités de commutation dans l'état de marche programmées et selon un nombre non supérieur au nombre maximum d'unités intérieures (9) du système de pompe à chaleur air/air chaud/froid (7) qui peuvent être alimentées électriquement simultanément par le surplus d'énergie électrique du système photovoltaïque (2).

3. Système de commande électronique (10) selon la revendication 1 ou 2, dans lequel l'unité de commande électronique (16) est en outre programmée de manière à ce qu'elle permette la réalisation de sélections hiérarchiques, ces sélections comprenant :
- une sélection principale entre un mode de fonctionnement manuel et un mode de fonctionnement automatique ;
- dans le mode de fonctionnement automatique, une sélection secondaire entre un mode chauffage, un mode refroidissement et un mode déshumidification ; et
- à la fois dans le mode chauffage et dans le mode refroidissement, une sélection tertiaire entre un mode de fonctionnement qui convient lorsque des personnes sont présentes dans l'environnement fermé, un mode de fonctionnement qui convient lorsque personne n'est présent dans l'environnement fermé et un mode de fonctionnement spécifique pour exploiter seulement la production d'énergie électrique du système photovoltaïque (2).

4. Système de commande électronique (10) selon la revendication 3, dans lequel l'unité de commande électronique (16) est en outre programmée de manière à ce qu'elle commute dans l'état de marche les unités intérieures (9) du système de pompe à chaleur air/air chaud/froid (7) sur la base du surplus d'énergie électrique du système photovoltaïque (2) à la fois dans le mode chauffage et dans le mode refroidissement.

5. Système de commande électronique (10) selon la revendication 3 ou 4, dans lequel, dans le mode de fonctionnement automatique qui convient lorsque des personnes sont présentes dans l'environnement fermé, l'unité de commande électronique (16) est en outre programmée :
- de manière à ce qu'elle vérifie si oui ou non les températures réglées sur les (chrono)-thermostats (11) peuvent être atteintes dans une période temporelle prédéterminée en utilisant seulement les unités intérieures (9) du système de pompe à chaleur air/air chaud/froid (7) ;
- dans l'affirmative, de manière à ce qu'elle maintienne la chaudière à eau (4) commutée dans l'état d'arrêt et de manière à ce qu'elle commute dans l'état de marche seulement les unités intérieures (9) du système de pompe à chaleur air/air chaud/froid (7) ; et
- dans la négative, de manière à ce qu'elle commute dans l'état de marche à la fois la chaudière à eau (4) et les unités intérieures (9) du système de pompe à chaleur air/air chaud/froid (7), également en présence d'un surplus de production d'énergie électrique du système photovoltaïque (2) par rapport à la consommation d'énergie électrique des appareils électriques (14) dans l'environnement fermé.

6. Système de commande électronique (10) selon la revendication 3, 4 ou 5, dans lequel, dans le mode de fonctionnement automatique qui convient lorsque personne n'est présent dans l'environnement fermé, l'unité de commande électronique (16) est en outre programmée :
- de manière à ce qu'elle climatise l'environnement fermé en utilisant seulement les unités intérieures (9) du système de pompe à chaleur air/air chaud/froid (7) pendant la journée ; et
- de manière à ce qu'elle commute dans l'état de marche la chaudière à eau (4) seulement lorsque le surplus d'énergie électrique du système photovoltaïque (2) a été épuisé.

7. Logiciel téléchargeable dans une unité de commande électronique (16) d'un système de commande électronique (10) d'une combinaison (1) constituée par une chaudière à eau et par un système de climatisation à pompe à chaleur air/air en couplage sur un système photovoltaïque (2) et dont la conception a pour objet de faire en sorte, lors de son exécution, que l'unité de commande électronique (16) devienne programmée tel que revendiqué selon l'une quelconque des revendications précédentes.
